Europäisches Patentamt

European Patent Office

Office européen des brevets

(19)

(11) **EP 0 782 018 B1**

(12) **FASCICULE DE BREVET EUROPEEN**

(45) Date de publication et mention
de la délivrance du brevet:
**10.10.2001 Bulletin 2001/41**

(51) Int Cl.⁷: **G02B 6/16**

(21) Numéro de dépôt: **96402816.1**

(22) Date de dépôt: **19.12.1996**

(54) **Procédé et dispositif d'inscription quasi-point par point d'un réseau de Bragg dans une fibre optique**

Verfahren und Vorrichtung zum quasi-punktweisen Schreiben eines Bragg-Gitters in eine optische Faser

Method and apparatus for quasi-point by point writing of a Bragg grating into an optical fiber

(84) Etats contractants désignés:
**AT BE CH DE ES FR GB IT LI NL SE**

(30) Priorité: **26.12.1995 FR 9515491**

(43) Date de publication de la demande:
**02.07.1997 Bulletin 1997/27**

(73) Titulaire: **ALCATEL**
**75008 Paris (FR)**

(72) Inventeurs:
- **Chesnoy, José**
  **75014 Paris (FR)**
- **Sansonetti, Pierre**
  **91120 Palaiseau (FR)**
- **Riant, Isabelle**
  **91120 Palaiseau (FR)**

(74) Mandataire: **Smith, Bradford Lee et al**
**COMPAGNIE FINANCIERE ALCATEL**
**Dépt. Propriété Industrielle**
**30, avenue Kléber**
**75116 Paris (FR)**

(56) Documents cités:
**EP-A- 0 560 511**        **EP-A- 0 606 726**
**GB-A- 2 272 075**        **US-A- 5 104 209**

- **ELECTRONICS LETTERS, vol. 29, no. 6, 18 Mars 1993, pages 566-568, XP002012604 D.Z. ANDERSON ET AL.: "PRODUCTION IN FIBRE GRATINGS USING A DIFFRACTIVE OPTICAL ELEMENT"**
- **ELECTRONICS LETTERS, vol. 31, no. 11, 25 Mai 1995, pages 901-902, XP002012605 N.H. RIZVI ET AL.: "Excimer laser writing of submicrometer period Bragg gratings using phase-shifting mask projection"**
- **ELECTRONICS LETTERS, vol. 30, no. 10, 12 Mai 1994, XP002012606 J. MARTIN ET F. QUELLETTE: "Novel writing technique of long and highly reflective in-fibre gratings"**

## Description

La présente invention concerne de manière générale les réseaux de Bragg, ou réseaux photoréfractifs, photoinscrits dans les fibres optiques. Plus précisément, l'invention concerne l'inscription quasi-point par point de ces réseaux.

L'inscription d'un réseau de Bragg dans une fibre optique recourt au principe fondamental de variation de l'indice de réfraction du coeur de la fibre par illumination à l'U.V. tel que décrit dans le brevet américain US-A-4 474 427. Pour cette inscription, peut être utilisée à titre d'exemple, selon la technique antérieure, ou bien une technique d'holographie rappelée dans le document US-A-4 725 110, ou bien une technique point par point décrite dans le brevet US-A-5 104 209, ou encore une technique à masque de phase divulguée dans le US-A-5 367 588. Cette dernière technique recourt à un masque de phase illuminé par un faisceau incident et situé au voisinage immédiat de la fibre. Dans le plan de la fibre, se produit une interférence entre les faisceaux d'ordres 1 et -1 diffractés par le masque.

Le document intitulé "Point-by-point fabrication of micro-Bragg gratings in photosensitive fibre using single excimer pulse refractive index modification techniques" de B.MALO et al. publié dans ELECTRONICS LETTERS, 2 septembre 1993, vol. 29, N°18 décrit une technique d'inscription point par point d'un réseau de Bragg. Chaque point est l'image d'une fente qui est focalisée par une lentille pour délimiter une tache de faisceau laser. La période requise pour le réseau afin qu'il réfléchisse la lumière au premier ordre pour la longueur d'onde 1558 nm, est de 533 nm. En pratique, selon la solution décrite dans ce document, il n'est pas possible d'inscrire un réseau de Bragg au premier ordre.

Le document EP 0 606 726 décrit encore une autre technique à masque de phase, selon laquelle une optique focalisante est insérée entre le masque et la fibre à illuminer de manière à concentrer l'énergie lumineuse sur le coeur de la fibre. En outre, cette optique agit comme un télescope, et permet donc d'inscrire un réseau dont le pas est différent de l'espacement du motif du masque de phase par agrandissement ou réduction des franges d'interférence.

La présente invention vise à remédier aux inconvénients précités en fournissant un dispositif et un procédé d'inscription quasi- point par point d'un réseau de Bragg dans une fibre optique, le réseau étant inscrit au premier ordre.

A cette fin, l'invention propose un dispositif d'inscription quasi- point, par point d'un réseau de Bragg dans un guide optique tel que défini dans la revendication 1.

De préférence, le dispositif comprend, comme réseau de diffraction, un masque de phase.

Par ailleurs, afin de réduire la dimension des optiques, le masque de phase et l'élément optique de focalisation peuvent être combinés sous la forme d'une unique optique diffractive.

Selon une variante avantageuse, l'amplitude de chacun des deux pics secondaires est sensiblement la moitié de l'amplitude du pic central.

Selon une réalisation, les moyens de déplacement du guide optique par rapport au masque de phase et l'optique de focalisation sont sous la forme d'un dispositif piézo-électrique.

Ces moyens de déplacement sont par exemple commandés, pour l'inscription d'une zone suivante, par des moyens de détection de type interférométrique.

L'invention propose en outre un procédé d'inscription quasi- point par point d'un réseau de Bragg dans un guide optique tel que défini dans la revendication indépendante 7.

D'autres caractéristiques et avantages de la présente invention apparaîtront plus clairement à la lecture de la description suivante, en référence aux dessins annexés correspondants, dans lesquels :

- la figure 1 montre un dispositif selon l'invention d'inscription quasi- point par point d'un réseau de Bragg dans une fibre optique;
- la figure 2 représente en coupe longitudinale une portion d'un réseau de diffraction du dispositif de la figure 1;
- la figure 3 montre la fonction d'intensité lumineuse produite par une combinaison d'un réseau de diffraction et d'une lentille de focalisation dans le dispositif de la figure 1;
- la figure 4 est une représentation d'une projection dans le plan focal d'une image reçue par la lentille de focalisation; et
- la figure 5 illustre la transformation sous forme d'une optique diffractive de la lentille de focalisation.

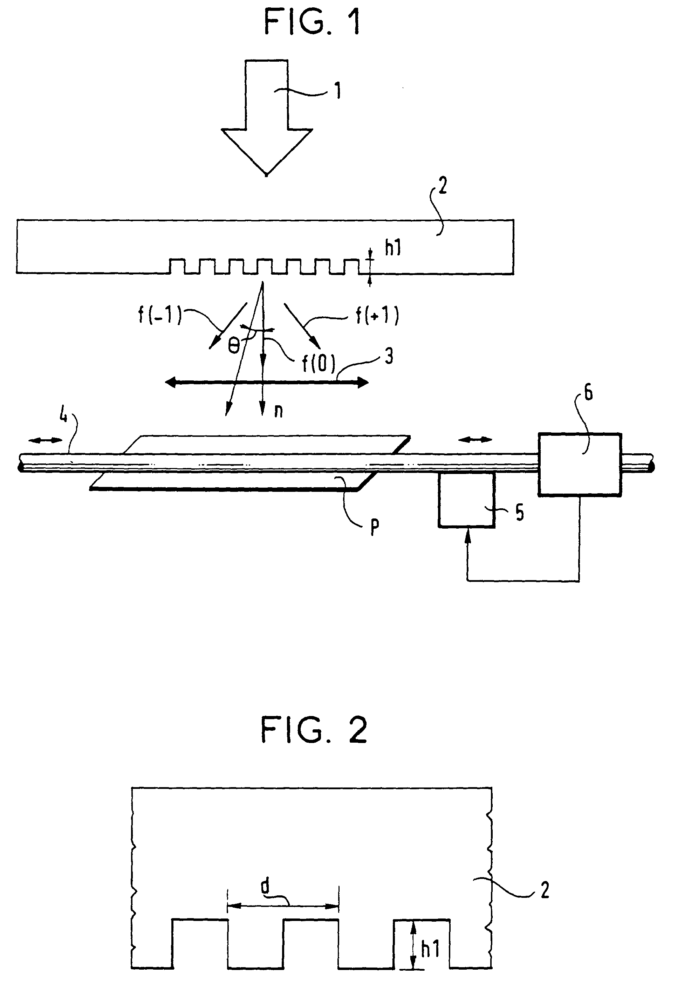

L'homme du métier notera que l'invention se distingue des réalisations de la technique antérieure utilisant un masque de phase en ce que ce n'est pas une interférence de faisceaux, mais une séparation de faisceaux, qui est mise en oeuvre pour produire un motif lumineux d'inscription du réseau. En référence à la figure 1, un dispositif d'inscription point par point d'un réseau de Bragg dans une fibre optique comprend selon l'invention un réseau de diffraction 2, une lentille de focalisation 3. Un faisceau lumineux primaire 1 produit par une source laser, typiquement KrF à la longueur d'onde $\lambda = 249$ nm, illumine une fibre optique 4 à travers successivement le réseau de diffraction 2 et la lentille de focalisation 3. Le réseau de diffraction 2 est par exemple sous la forme d'un masque de phase possédant un motif surfacique périodique d'onde rectangulaire définissant des dents successives sur une portion de longueur donnée. Comme montré sur la figure 2, le motif surfacique présente une période notée d comprenant un front bas et un front haut, ce dernier front formant la dent. Un tel réseau de diffraction produit des faisceaux diffractés de différents ordres, notamment un faisceau secondaire d'ordre 0, noté f(0) et deux faisceaux secondaires symétriques d'ordres supérieurs 1 et -1, notés f(1) et f(-1). Ces faisceaux secondaires se projettent sur la lentille de focalisation 3 qui en réponse produit un motif élémentaire d'inscription de réseau de Bragg sur une zone de la fibre optique 4.

De manière connue dans les réseaux de diffraction, la relation suivante est obtenue:

$$d( \sin i - \sin \theta ) = m.\lambda,$$

où d est la période du réseau de diffraction 2, i est l'angle d'incidence du faisceau primaire, θ est l'angle de diffraction du faisceau secondaire diffracté considéré, m est l'ordre de ce faisceau secondaire diffracté et λ est la longueur d'onde du faisceau primaire.

Dans la réalisation de la figure 1, l'angle i est tel que sin(i) = 0. Le faisceau d'ordre 0, soit f(0), est tel i = (θ) et est donc diffracté suivant la normale n au masque de phase 2. Les deux faisceaux d'ordres respectifs 1 et (-1) sont tels que :

$$d.\sin (\theta) = \pm \lambda, \text{ soit :}$$

$$\sin (\theta) = \pm \lambda/d. \tag{1}$$

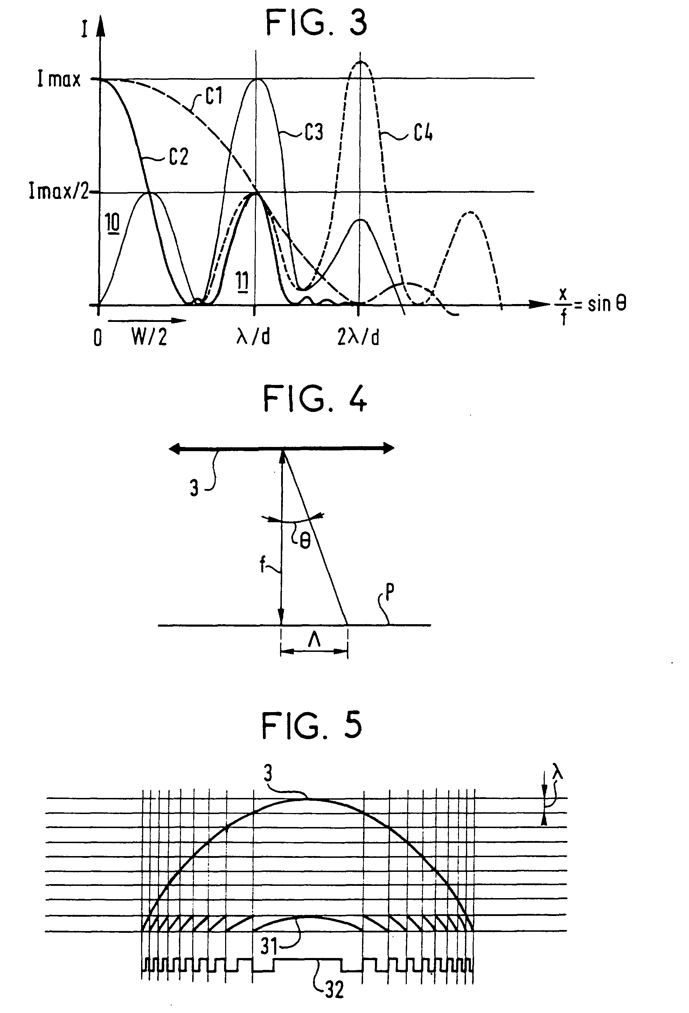

En résultat de la focalisation par la lentille 3 des faisceaux primaire f(0) et secondaires f(1) et f(-1) produits par le réseau de diffraction 2, on obtient, sur la zone d'inscription de la fibre, une fonction d'intensité I du type représenté par la courbe C2 dans la figure 3. Il est à noter que cette lentille 3 réalise une transformée de Fourier du type conversion d'angle en position, et non pas une simple transformation d'agrandissement ou réduction du motif d'interférence tel que cela est décrit dans le EP- 0 606 726. La courbe d'intensité C2, dont seule une moitié est représentée, comprend un pic central 10 et deux pics secondaires 11 résultant respectivement du faisceau secondaire d'ordre 0 et des deux faisceaux secondaires d'ordres 1 et (-1). La courbe C2 est incluse dans une enveloppe C1.

Comme montré dans la figure 4, dans le plan focal P de la lentille 3, le pas Λ du réseau à inscrire dans la fibre optique 4 est donné géométriquement par :

$$\Lambda \cong \sin(\theta). f, \text{ soit}$$

$$\sin (\theta) = \Lambda /f \tag{2}$$

En comparant les équations (1) et (2), l'on obtient :

$$\lambda/d = \Lambda/f, \text{ soit}$$

$$d = (f.\lambda)/\Lambda \tag{3}$$

Par ailleurs, la dimension du spot de focalisation w du faisceau d'ordre 0, noté 10, doit être égal au pas Λ du réseau de Bragg à inscrire dans la fibre 4.

Or, pour une lentille de distance focale f et de nombre d'ouverture f# = f/D, où D désigne le diamètre du faisceau, la dimension w du spot est donné par :

$$w = 2.\lambda.f\#$$

Il faut donc avoir :

$$2.\lambda.f\# = \Lambda. \tag{4}$$

Dans un exemple de réalisation selon lequel l'on souhaite obtenir un réseau de Bragg à 1558 nm, le pas Λ du réseau de Bragg doit être égal à 533 nm pour qu'il réfléchisse la lumière au premier ordre. Le faisceau lumineux primaire 1 a typiquement une longueur d'onde λ = 249 nm. Il résulte donc de l'équation (4) pour cet exemple de réalisation :

$$2. (249) .f\# = 533,$$

soit f# ≅ 1, ce qui est équivalent à dire que f = D.

En reprenant l'équation (3) précisant que d = (f.λ)/Λ, et sachant que le pas du réseau à inscrire Λ est égal à 2.λ dans la réalisation choisie, l'on obtient d = (f/2) = (D/2).

Ainsi, en prenant un faisceau primaire de diamètre égal à 25 mm, alors le motif surfacique d'onde rectangulaire du réseau de diffraction 2 possède une longueur D égale à 25 mm. Sachant que d = (D/2), la période d du motif surfacique est égale à 12, 5 mm. Le motif surfacique du réseau de diffraction 2 inclut donc deux périodes. La distance focale f de la lentille 3 est également de 25 mm.

Comme montré dans la figure 5, une lentille de focalisation 3 de forme convergente est sensiblement équivalente à une lentille, dite de Fresnel, 31 en "dents de scie" gravée sur une épaisseur donnée. Cela résulte du fait que toute variation de la hauteur de la lentille induisant une différence de marche multiple de λ pour l'onde reçue, peut ne pas être considérée. Cette lentille de Fresnel peut encore être approchée par un optique à motif surfacique à créneaux 32. Pour cela, chaque "dent de scie" de la lentille de Fresnel 31 est approximée par un front haut et un front bas correspondant respectivement aux partie haute et partie basse de la dent de scie. Une portion d'onde reçue à travers un front haut va être déphasée de π par rapport une portion d'onde reçue à travers un front bas.

Chaque dent, ou front haut, du réseau de diffraction 2 possède une hauteur h = h1 associée à un déphasage de π/2 par rapport à un front bas. En pratique ce déphasage peut être différent de π/2, ce qui modifie les amplitudes relatives I entre pics principal 10 et secondaires 11. Parallèlement, chaque dent de la lentille de focalisation approximée 32 possède une hauteur h'= h2 associée à un déphasage de π par rapport à un front bas.

Selon l'invention, il est envisagé que le masque de phase 2 et la lentille optique de focalisation approximée 32 soient tous deux combinés de sorte à utiliser une unique optique diffractive. Pour cela, on "superpose" le masque de phase et la lentille de focalisation approximée. La surface de l'unique optique diffractive est gravée de telle sorte qu'en chaque point la hauteur de dent soit égale à la somme des hauteurs de dent respectives du réseau de diffraction 2 et de la lentille de focalisation approximée 32, pour le point considéré. Dans l'unique optique diffractive, peuvent ainsi coexister des dents de hauteur h1, h2 ou (h1 + h2). Alternativement, l'unique optique diffractive peut être réalisée en gravant une structure correspondant à la réponse souhaitée de l'ensemble réseau de diffraction/lentille.

En revenant à la figure 3, la fonction d'intensité I d'inscription d'une zone dans le plan focal de la lentille 3 comprend un pic central 10 et deux pics secondaires 11.

Deux variantes peuvent être envisagées pour l'inscription des différentes zones successives destinées à former ensemble le réseau. Selon une première variante, après l'inscription d'une zone, la zone suivante est inscrite après déplacement de la fibre 4 relativement auxdits réseau de diffraction 2 et élément optique de focalisation 3, de sorte que pour la zone suivante, le pic central soit localisé au point d'un pic secondaire de la zone précédente, comme montré par la courbe en trait discontinu C3 dans la figure 3. Selon une seconde variante, après l'inscription d'une zone, la zone suivante est inscrite après un déplacement de la fibre 4, relativement auxdits réseau de diffraction 2 et élément optique de focalisation 3, égal au double du déplacement de la première variante. Ainsi, pour la zone suivante, le pic secondaire est localisé au point d'un pic secondaire de la zone précédente, comme illustré par la courbe C4 dans la figure 3. Selon cette seconde variante, l'amplitude de chacun des deux pics secondaires 11 doit être égale sensiblement à la moitié de l'amplitude du pic central 10. En pratique, cette condition est obtenue en prévoyant que chaque dent, ou front haut, du réseau de diffraction 2 possède une hauteur h = h1 associé à un déphasage de π/2 par rapport à un front bas.

En revenant à la figure 1, le déplacement de la fibre relativement aux réseau de diffraction 2 et élément optique de focalisation 3 est assuré au moyen d'un dispositif 5, par exemple sous la sous la forme d'un dispositif piézo-électrique. Il peut être prévu d'utiliser un dispositif de détection optique 6, de type interféromètre, situé dans le plan de la fibre 4. Ce dispositif de détection 6 mesure des déplacements en translation de la fibre. Le dispositif de déplacement 5 est commandé en conséquence par ce dispositif optique 6 pour l'inscription d'une zone suivante du réseau de Bragg.

Le système décrit offre la possibilité d'inscrire des réseaux courts, typiquement inférieurs à 100 μm. En outre, selon l'invention, la distance entres pics secondaires 11 et pic central 10 peut être modifiée en utilisant un faisceau primaire 1 ou bien convergent ou bien divergent, selon une technique décrite dans la demande de brevet européen EP 0 721 118 A (qui constitue un document selon l'Art. 54(3) CBE) incluse par référence dans la présente demande. Cette solution est intéressante en ce qu'elle permet de faire varier le pas du réseau.

## Revendications

1. Dispositif d'inscription quasi-point par point d'un réseau de Bragg de pas Λ dans un guide optique (4), comprenant :

   - des moyens d'illumination pour produire un faisceau primaire (1),
   - un réseau de diffraction (2) pour recevoir ledit faisceau primaire (1) et produire un faisceau secondaire d'ordre 0 (f(0)) et deux faisceaux secondaires symétriques d'ordre supérieur (f (1); f(-1)) générés chacun sous une inclinaison différente,
   - un élément optique de focalisation (3) pour focaliser lesdits trois faisceaux secondaires sur une zone d'inscription dudit guide (4), en trois endroits distincts de cette zone, selon une répartition d'intensité lumineuse (I) d'inscription comprenant, d'une part, un pic central (10) correspondant audit faisceau secondaire d'ordre 0 et, d'autre part, deux pics latéraux (11) correspondant aux dits faisceaux secondaires d'ordre supérieur et distants chacun du pic central d'une distance prédéterminée 1, ladite répartition d'intensité lumineuse entraînant ainsi l'inscription au moins partielle sur ladite zone de guide optique de trois motifs élémentaires consécutifs de réseau de Bragg, séparés les uns des autres d'un pas Λ égal audit écartement l entre lesdits pics latéraux et ledit pic central, et
   - des moyens de déplacement pas-a-pas (5) dudit guide optique (4) relativement audits réseau de diffraction et élément optique de focalisation (2,3) selon une distance égale audit écartement l entre lesdits pics latéraux et ledit pic central, ou au double dudit écartement l, de façon à permettre l'inscription successive de l'ensemble des motifs élémentaires constitutifs du réseau de Bragg de pas Λ.

**2.** Dispositif conforme à la revendication 1, dans lequel le réseau de diffraction (2) est un masque de phase.

**3.** Dispositif conforme à la revendication 2, dans lequel ledit masque de phase (2) et ledit élément optique de focalisation (3) sont combinés sous la forme d'une unique optique diffractive.

**4.** Dispositif conforme à l'une quelconque des revendications 1 à 3, dans lequel l'amplitude de chacun des deux pics secondaires (11) est sensiblement la moitié de l'amplitude du pic central (10).

**5.** Dispositif conforme à l'une quelconque des revendications 1 à 4, dans lequel lesdits moyens de déplacement (5) sont sous la forme d'un dispositif piézo-électrique.

**6.** Dispositif conforme à l'une quelconque des revendications 1 à 5, dans lequel lesdits moyens de déplacement (5) sont commandés, pour l'inscription d'une zone suivante, par des moyens de détection (6) de type interférométrique.

**7.** Procédé d'inscription quasi-point par point d'un réseau de Bragg de pas Λ dans un guide optique selon lequel

- on forme un faisceau lumineux primaire (1),
- on sépare ledit faisceau lumineux primaire en au moins un faisceau lumineux secondaire d'ordre 0 et deux faisceaux secondaires symétriques d'ordre supérieur générés chacun sous une inclinaison différente, et
- on focalise lesdits trois faisceaux secondaires sur trois endroits distincts d'une zone d'inscription dudit guide, de sorte à définir une fonction d'intensité comprenant un pic central et deux pics secondaires chacun distant du pic central d'une distance prédéterminée I, ladite répartition d'intensité lumineuse entraînant ainsi l'inscription au moins partielle sur ladite zone de guide optique de trois motifs élémentaires consécutifs de réseau de Bragg, séparés les uns des autres d'un pas Λ égal audit écartement I entre lesdits pics latéraux et ledit pic central, et
- on déplace ledit guide optique (4) relativement audits réseau de diffraction et élément optique de focalisation (2,3) selon une distance égale audit écartement I entre lesdits pics latéraux et ledit pic central, ou au double dudit écartement I, de façon à permettre l'inscription successive de l'ensemble des motifs élémentaires constitutifs du réseau de Bragg de pas Λ.

**Patentansprüche**

**1.** Vorrichtung zum quasi-punktweisen Schreiben eines Bragg-Gitters mit Gitterkonstante Ë in einem optischen Leiter (4), mit:

- Beleuchtungsmitteln zum Erzeugen eines Primärstrahls (1),
- einem Beugungsgitter (2) zum Empfangen des Primärstrahls (1) und Erzeugen eines Sekundärstrahls nullter Ordnung (f(0)) und von zwei symmetrischen Sekundärstrahlen höherer Ordnung (f(1); f(-1)), die jeweils unter einer anderen Neigung erzeugt werden,
- einem optischen Fokussierungselement (3) zum Fokussieren der drei Sekundärstrahlen auf eine Schreibzone des Leiters (4) an drei verschiedenen Orten dieser Zone mit einer Schreiblichtintensitätsverteilung (I), die einerseits eine zentrale Spitze (10), die dem Sekundärstrahl nullter Ordnung entspricht und andererseits zwei seitliche Spitzen (11) umfasst, die den Sekundärstrahlen höherer Ordnung entsprechen und jeweils von der zentralen Spitze einen vorgegebenen Abstand I haben, wobei die Lichtintensitätsverteilung so zum wenigstens teilweisen Schreiben von drei aufeinanderfolgenden Bragg-Gitter-Elementarmustern in die Zone des optischen Leiters führt, die voneinander durch eine Gitterkonstante ? getrennt sind, die gleich dem Abstand I zwischen den seitlichen Spitzen und der zentralen Spitze ist, und
- Mitteln zum schrittweisen Verschieben (5) des optischen Leiters (4) relativ zu dem Beugungsgitter und dem optischen Fokussierungselement (2, 3) um eine Strecke gleich dem Abstand 1 zwischen den seitlichen Spitzen und der zentralen Spitze oder dem Doppelten des Abstands 1, um das sukzessive Schreiben der Gesamtheit der das Bragg-Gitter mit Gitterkonstante Ë bildenden Elementarmuster zu ermöglichen.

**2.** Vorrichtung nach Anspruch 1, bei der das Beugungsgitter (2) ein Phasengitter ist.

**3.** Vorrichtung nach Anspruch 2, bei der die Phasenmaske (2) und das optische Fokussierungselement (3) in Form einer einzigen diffraktiven Optik kombiniert sind.

**4.** Vorrichtung nach einem beliebigen der Ansprüche 1 bis 3, bei der die Amplitude jeder der zwei sekundären Spitzen (11) im wesentlichen die Hälfte der Amplitude der zentralen Spitze (10) ist.

**5.** Vorrichtung nach einem beliebigen der Ansprüche 1 bis 4, bei der die Mittel zum Verschieben (5) die Form einer piezoelektrischen Vorrichtung haben.

6. Vorrichtung nach einem beliebigen der Ansprüche 1 bis 5, bei der die Mittel zum Verschieben (5) zum Schreiben einer nachfolgenden Zone durch Erfassungsmittel (6) vom interferometrischen Typ gesteuert sind.

7. Verfahren zum quasi-punktweisen Schreiben eines Bragg-Gitters mit Gitterkonstante Ë in einen optischen Leiter, bei dem

- ein Primärlichtstrahl (1) gebildet wird,
- der Primärlichtstrahl in wenigstens einen Sekundärlichtstrahl nullter Ordnung und zwei symmetrische Sekundärlichtstrahlen höherer Ordnung aufgeteilt wird, die jeweils unter einer unterschiedlichen Neigung erzeugt werden, und
- die drei Sekundärstrahlen auf drei verschiedene Orte einer Schreibzone des Leiters fokusiert werden, so dass eine Intensitätsfunktion definiert wird, die eine zentrale Spitze und zwei sekundäre Spitzen jeweils in einem vorgegebenen Abstand I von der zentralen Spitze umfasst, wobei die Lichtintensitätsverteilung so zum wenigstens partiellen Schreiben von drei aufeinanderfolgenden Elementarmustern des Bragg-Gitters in die Zone des optischen Leiters führt, die voneinander durch eine Gitterkonstante ? gleich dem Abstand I zwischen den seitlichen Spitzen und der zentralen Spitze getrennt sind, und
- der optischen Leiter (4) relativ zu dem Beugungsgitter und dem optischen Fokusierungselement (2, 3) um eine Strecke gleich dem Abstand I zwischen den seitlichen Spitzen der zentralen Spitze oder dem Doppelten des Abstands I verschoben wird, um das sukzessive Schreiben der Gesamtheit der Elementarmuster zu ermöglichen, die das Bragg-Gitter mit Gitterkonstante Ë bilden.

**Claims**

1. A system for writing a Bragg grating of pitch $\Lambda$ virtually point-by-point in an optical waveguide (4), including illumination means for producing a primary beam (1), a diffraction grating (2) for receiving said primary beam (1) and producing a 0 order secondary beam (f(0)) and two symmetrical higher order secondary beams (f(1)); f(-1)) each generated with a different inclination and a focusing optical member (3) for focusing said three secondary beams onto an area of writing of said waveguide (4), in three separate locations in that area, in accordance with a writing luminous intensity distribution (I) comprising, on the one hand, a central peak (10) corresponding to said 0 order secondary beam and, on the other hand, two lateral peaks (11) corresponding to said higher order secondary beams and each at a predetermined distance (I) from the central peak, said luminous intensity distribution therefore leading to at least partial writing in said optical guide area of three consecutive Bragg grating patterns separated from each other by a pitch $\Lambda$ equal to said distance (I) between said lateral peaks and said central peak, and

- displacement means (5) for moving said optical guide (4) step-by-step relative to said diffraction grating and focusing optical element (2, 3) by a distance equal to said distance (I) between said lateral peaks and said central peak, or twice said distance (I), to enable successive writing of all the elementary patterns constituting the Bragg grating of pitch $\Lambda$.

2. The system according to claim 1, **characterized in that** the diffraction grating (2) is a phase mask.

3. The system according to claim 2, **characterized in that** said phase mask (2) and said focusing optical member (3) are combined in the form of a single diffractive optic.

4. The system according to any one of claims 1 to 3, **characterized in that** the amplitude of each of the two secondary peaks (11) is substantially half the amplitude of the central peak (10).

5. The system according to any one of claims 1 to 4, **characterized in that** said displacement means (5) are in the form of a piezo-electric device.

6. The system according to any one of claims 1 to 5, **characterized in that** said displacement means (5) are controlled by interferometric detector means (6) to write a next area.

7. A method of writing a Bragg grating of pitch $\Lambda$ virtually point-by-point in an optical waveguide, **characterized in that** a primary light beam (1) is formed, said primary light beam is separated into at least one 0 order secondary light beam and two higher order symmetrical secondary beams each generated with a different inclination, and said three secondary beams are focused onto three different regions of a writing area of said waveguide, to define an intensity function having a central peak and two secondary peaks each spaced from the central peak by a predetermined distance (I) said luminous intensity distribution therefore leading to at least partial writing in said optical guide area of three consecutive Bragg grating patterns separated from each other by a pitch Λ equal to said distance (I) between said lateral peaks and said central peak, and

- said optical guide (4) is moved relative to said diffraction grating and focusing optical element (2, 3) by a distance equal to said distance (I) between said lateral peaks and said central peak, or twice said distance (I), to enable successive writing of all the elementary patterns constituting the Bragg grating of pitch Λ.

# FIG. 1

1

2

h1

f(-1)   f(+1)

θ   f(0)   3

n

4

P

5

6

# FIG. 2

d

2

h1

EP 0 782 018 B1

FIG. 3

FIG. 4

FIG. 5